# EUROPÄISCHE PATENTSCHRIFT

(11) **EP 3 303 437 B1**
(45) Veröffentlichungstag und Bekanntmachung des Hinweises auf die Patenterteilung: **25.12.2019**
(21) Anmeldenummer: 16727143.6
(22) Anmeldetag: 20.05.2016
(51) Int. Cl.: C08G 18/58, C08G 18/22, C08G 18/28, C08G 18/32

(54) **POLYURETHAN-POLYISOCYANURAT HARZE FÜR FASERVERBUNDWERKSTOFFE MIT LANGER OFFENER ZEIT**
POLYURETHANE POLYISOCYANURATE RESINS FOR FIBRE COMPOSITES WITH LONG OPEN TIME
RESINE DE POLYURETHANE-POLYISOCYANURATE POUR MATIERE COMPOSITE FIBREUSE PRESENTANT UN TEMPS D'OUVERTURE LONG

(30) Priorität: 29.05.2015 EP 15169818
(43) Veröffentlichungstag der Anmeldung: 11.04.2018
(73) Patentinhaber: BASF SE, 67056 Ludwigshafen am Rhein (DE)
(72) Erfinder: GOESCHEL, Julia, 28201 Bremen (DE); ALBUERNE, Julio, 49448 Lemfoerde (DE); ILLGUTH, Rolf, 49356 Diepholz (DE); GEHRING, Margit, 49448 Lemfoerde (DE)
(74) Vertreter: BASF IP Association
(86) Internationale Anmeldenummer: PCT/EP2016/061360
(87) Internationale Veröffentlichungsnummer: WO 2016/193020

(56) Entgegenhaltungen:
- WO-A1-2012/103965
- WO-A1-2015/078740
- US-A1- 2015 031 527

## Beschreibung

Die vorliegende Erfindung betrifft ein Verfahren zur Herstellung von Polyurethan-Polyisocyanurat-Faserverbundteilen, bei dem man (a) Polyisocyanat, (b) eine Mischung erhältlich durch Einbringen eines Alkali- oder Erdalkalimetallsalzes in eine Urethangruppen enthaltende Verbindung R-NH-CO-R' enthalten, wobei R ungleich Wasserstoff bzw. ungleich COR" ist, (c) eine oder mehrere Epoxidgruppen enthaltende Verbindung und (d) Polyetherol mit einer mittleren Funktionalität von 1,8 bis 5,0 und einer Hydroxylzahl von 200 bis 500, (e) Kettenverlängerer und (f) faserförmige Verstärkungsmittel und gegebenenfalls weitere Additive zu einer Reaktionsmischung vermischt, die Reaktionsmischung auf das faserförmige Verstärkungsmittel aufbringt und zum Polyurethan-Polyisocyanurat-Faserverbundteil ausreagieren lässt, wobei der Gehalt an Alkali- oder Erdalkalimetallionen pro Urethangruppe in der Verbindung (b) 0,0001 bis 3,5, bezogen auf die Anzahl der Alkali- oder Erdalkalimetallionen und Urethangruppen, beträgt, der Anteil an der eine oder mehrere Epoxidgruppen enthaltende Verbindung (c) von 0,3 bis 15 Gew.-%, bezogen auf das Gesamtgewicht der Komponenten (c) und (d), beträgt und der Isocyanatindex 200 bis 450 ist. Weiter betrifft die vorliegende Erfindung ein Polyurethan-Polyisocyanurat-Faserverbundteil, herstellbar nach einem solchen Verfahren sowie die Verwendung eines solchen Polyurethan-Polyisocyanurat-Faserverbundteils als Karosseriebauteil von Fahrzeugen, wie Stoßstangen, Kotflügel oder Dachteile, oder als strukturelle- oder semistrukturelle Bauteile für Fahrzeuge oder Windkraftanlagen herzustellen, eingesetzt.

Insbesondere zur Herstellung von großflächigen Faserverbundstoffen wird ein Kunststoffsystem als Matrixsystem benötigt, dass eine lange offene Zeit bei konstant niedriger Viskosität aufweist, damit die Verstärkungsmittel, wie Glas- oder Carbonfasern oder -fasermatten, vollständig benetzt werden bevor das Kunststoffsystem zum fertigen Kunststoff aushärtet. Ebenso wird aber auch gefordert, dass die Kunststoffsysteme möglichst schnell zum Kunststoff aushärten, so dass schnellere Zykluszeiten möglich werden und damit die Rentabilität erhöht wird. In der Regel wird die lange offene Zeit nur durch Epoxidsysteme oder ungesättigten Polyestersystemen erreicht, diese benötigen aber in der Regel lange Zeiten zum Aushärten.

Eine Möglichkeit zur Verlängerung der offenen Zeit bei schneller Aushärtung von Polyurethansystemen ist der Einsatz von säureblockierten Katalysatoren. So beschreibt EP 2257580 den Einsatz von säureblockierten Aminkatalysatoren in Polyurethansystemen zur Herstellung von Sandwichbauteilen. Säureblockierte Katalysatoren ermöglichen allerdings nur eine Verlängerung der Verarbeitungszeit im Bereich von Minuten. Gefordert wird dagegen eine Verarbeitungszeit von bis zu mehreren Stunden.

In WO 10121898 wird eine Polyisocyanat Komponente beschrieben, die in Teilen aus einem bezüglich des Anions bidentalen Harnstoff-Prepolymer (-NH-CO-NH-) besteht, das mit Lithiumchlorid gemischt wurde. Mischt man diese Komponente mit einer Diglycidylether und Polyol enthaltenden zweiten Komponente und erwärmt diese Mischung auf 80-90 °C, findet eine rasche Reaktion statt, die zu einer Durchhärtung des Materials führt.

WO 12103965 beschreibt ein Epoxy-basiertes System, das auf der gleichen Katalyse wie in WO 10121898 beschrieben basiert. Die für die Katalyse notwendige Gruppen werden hier über die zwei am Stickstoff befindlichen H-Atome als bezüglich des Anions bidentale Carboxamid Gruppe (-CO-NH₂) mit LiCl definiert.

WO 13098034 umfasst eine reaktive Mischung, die neben Lithium-Halogenid eine bezüglich des Kations bidentale -(-CO-NH-CO-)- Gruppe erfordert. Die in dieser Schrift beschriebene Harnstoffkomponente kann auch polydentale Biuret Gruppen (-NH-CO-NH-CO-NH-) enthalten.

In WO 13143841 wird ein Trimerisierungskatalysator bestehend aus Alkali- oder Erdalkalisalzen in Kombination mit gegenüber dem Anion bidentalen Carboxamidgruppen der Struktur-CO-NH2 oder in Kombination mit Gruppen -(-CO-NH-CO-)-, die sich bezüglich des Kations bidental verhalten, beschrieben.

Nachteilig an den in WO 10121898, WO 12103965 WO 13098034 und WO 13143841 beschriebenen Systemen ist, dass der Harnstoff, Carboxylat oder Biuret- geblockte Katalysator in relativ großen Mengen zugegeben werden muss, um ausreichend wirksam zu sein und relativ spröde Materialien erhalten werden.

Aufgabe der vorliegenden Erfindung war es daher ein Polyurethan-Polyisocyanurat-System zur Herstellung von Polyurethan-Polyisocyanurat-Faserverbundteilen zu liefern, das eine lange offene Zeit aufweist, innerhalb von wenigen Minuten aushärten kann und eine erhöhte Effektivität der Katalyse im Vergleich zu WO 10121898, WO 12103965 WO 13098034 und WO 13143841 aufweist.

Die erfindungsgemäße Aufgabe wurde gelöst durch ein Verfahren zur Herstellung von Polyurethan-Polyisocyanurat-Faserverbundteilen, bei dem man (a) Polyisocyanat, (b) einer Mischung erhältlich durch Einbringen eines Alkali- oder Erdalkalimetallsalzes in eine Urethangruppen enthaltende Verbindung R-NH-CO-R' enthalten, wobei R ungleich Wasserstoff bzw. ungleich COR" ist, (c) eine oder mehrere Epoxidgruppen enthaltende Verbindung und (d) Polyetherol mit einer mittleren Funktionalität von 1,8 bis 3,0 und einer Hydroxylzahl von 200 bis 500, (e) Kettenverlängerer und (f) faserförmige Verstärkungsmittel und gegebenenfalls weitere Additive zu einer Reaktionsmischung vermischt, die Reaktionsmischung auf das faserförmige Verstärkungsmittel aufbringt und zum Polyurethan-Polyisocyanurat-Faserverbundteil ausreagieren lässt, wobei der Gehalt an Alkali- oder Erdalkalimetallionen pro Urethangruppe in der Verbindung (b) 0,0001 bis 5,0, bezogen auf die Anzahl der Alkali- oder Erdalkalimetallionen und Urethangruppen, beträgt, der Anteil an der eine oder mehrere Epoxidgruppen enthaltende Verbindung (c) von 0,3 bis 15 Gew.-%, bezogen auf das Gesamtgewicht der Komponenten (c) und (d), beträgt und der Isocyanatindex 200 bis 450 ist.

Polyisocyanate (a) umfassen alle zur Herstellung von Polyurethanen bekannten aliphatischen, cycloaliphatischen und aromatischen Isocyanat. Diese weisen vorzugsweise eine mittlere Funktionalität von kleiner 2,5 auf. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Vorzugsweise werden als Polyisocyanate (a) monomeres Diphenylmethandiisocyanat, beispielsweise 2,2'- Diphenylmethandiisocyanat, 2,4'- Diphenylmethandiisocyanat, 4,4'- Diphenylmethandiisocyanat oder Mischungen daraus eingesetzt. Dabei kann Diphenylmethandiisocyanat auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid, uretdion- oder uretoniminmodifiziertes Diphenylmethandiisocyanat, insbesondere carbodiimid modifiziertes Diphenylmethandiisocyanat, enthalten.

Polyisocyanate (a) können auch in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden. Der NCO-Gehalt erfindungsgemäßer Polyisocyanatprepolymere beträgt vorzugsweise von 5 bis 32 Gew.-% NCO, besonders bevorzugt von 15 bis 28 Gew.-% NCO.

Polyole (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polyole Polyether- oder Polyesterole, wie die nachfolgend unter (d) beschriebenen Polyole, eingesetzt werden. Vorzugsweise werden als Polyole (a-2) Polyole, enthaltend sekundäre OH-Gruppen, eingesetzt, wie beispielsweise Polypropylenoxyd. Die Polyole (a-2) besitzen dabei vorzugsweise eine Funktionalität von 2 bis 6, besonders bevorzugt von 2 bis 4 und insbesondere 2 bis 3. Besonders bevorzugt enthalten die Polyole (a-2) Polyesterole, enthaltend hydrophobe Stoffe, wie unter (b) beschrieben.

Gegebenenfalls können der Umsetzung zum Polyisocyanatprepolymer noch Kettenverlängerungsmittel (a-3) zugegeben werden. Als Kettenverlängerungsmittel (a-3) für das Prepolymer sind zwei- oder dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Dipropylenglycol, geeignet. Geeignete Kettenverlängerer sind auch unter (e) beschrieben.

Solche Polyisocyanatprepolymere sind beispielsweise in US 3883571, WO 02/10250 und US 4229347 beschrieben.

Besonders bevorzugt wird als Polyisocyanat (a) Diphenylmethandiisocyanat oder ein Polyisocyanatprepolymer auf Basis von monomerem 4,4'- Diphenylmethandiisocyanat oder Mischungen von 4,4'- Diphenylmethandiisocyanat mit dessen Derivaten und Polypropylenoxid mit einer Funktionalität von 2 bis 4 sowie gegebenenfalls Dipropylenglycol oder monomeres eingesetzt.

Vorzugsweise enthält die Komponente (d) weniger als 0,0001 Gew.-%, bezogen auf das Gesamtgewicht der Komponente (d), an Alkali- oder Erdalkalimetallionen. Besonders bevorzugt beträgt der Gehalt an Alkali- oder Erdalkalimetallionen in der Komponente (d) weniger als 0,00005, mehr bevorzugt 0,00003 und insbesondere 0,00001 Gew.-%, bezogen auf das Gesamtgewicht der Komponente (d).

Vorzugsweise enthalten die Komponenten (c) und (d) weniger als 0,0001 Gew.-%, bezogen auf das Gesamtgewicht der Komponenten (c) und (d), an Alkali- oder Erdalkalimetallionen. Besonders bevorzugt beträgt der Gehalt an Alkali- oder Erdalkalimetallionen in den Komponenten (c) und (d) weniger als 0,00005, mehr bevorzugt 0,00003 und insbesondere 0,00001 Gew.-%, bezogen auf das Gesamtgewicht der Komponenten (c) und (d).

Weiter bevorzugt enthalten die Komponenten (c), (d) und (e) weniger als 0,0001 Gew.-%, bezogen auf das Gesamtgewicht der Komponenten (c), (d) und (e), an Alkali- oder Erdalkalimetallionen. Besonders bevorzugt beträgt der Gehalt an Alkali- oder Erdalkalimetallionen in den Komponenten (c), (d) und (e) weniger als 0,00005, mehr bevorzugt 0,00003 und insbesondere 0,00001 Gew.-%, bezogen auf das Gesamtgewicht der Komponenten (c), (d) und (e).

Als Komponente (b) wird eine Mischung, erhältlich durch Einbringen eines Alkali- oder Erdalkalimetallsalzes in eine Urethangruppen enthaltende Verbindung, eingesetzt.

Dabei wird als Alkali- oder Erdalkalimetallsalz eine Verbindung eingesetzt, die die Reaktion zwischen Isocyanaten (a), der eine oder mehrere Epoxidgruppen enthaltende Verbindungen (c) und gegebenenfalls Polyolen (d) beschleunigt. Diese Verbindungen umfassen insbesondere Salze von Natrium, Lithium, Magnesium und Kalium und Ammoniumverbindungen, vorzugsweise Lithium oder Magnesium, mit beliebigen Anionen, vorzugsweise mit Anionen organischer Säuren wie Carboxylaten und mehr bevorzugt anorganischer Säuren, wie Nitraten, Halogeniden, Sulfaten, Sulfiten, und Phosphaten, noch mehr bevorzugt mit Anionen einprotoniger Säuren, wie Nitraten oder Halogeniden und insbesondere Nitraten, Chloriden, Bromiden oder lodiden. Besonders bevorzugt werden Lithiumchlorid, Lithiumbromid und Magnesiumdichlorid und insbesondere Lithiumchlorid eingesetzt. Erfindungsgemäße Alkali- oder Erdalkalimetallsalze können einzeln oder als Mischungen eingesetzt werden.

Vorzugsweise werden neben dem Alkali- oder Erdalkalimetallsalz keine weiteren Verbindungen eingesetzt, die die Reaktion von Isocyanaten mit gegenüber Isocyanaten reaktiven Gruppen beschleunigen.

Als Urethangruppen enthaltende Verbindung werden beliebige Verbindungen verstanden, die bei 20 °C fest oder flüssig vorliegen und mindestens eine Urethangruppe R-NH-CO-R' enthalten, wobei R ungleich Wasserstoff bzw. ungleich COR" ist. Vorzugsweise ist die Urethangruppen enthaltende Verbindung in Komponente (b) dabei erhältlich durch Umsetzung aus einem zweiten Polyisocyanat und einer Verbindung mit mindestens einer OH-Gruppe. Bevorzugt sind hierbei Verbindungen die bei 50 °C, besonders bevorzugt, die bei Raumtemperatur flüssig sind. Dabei ist im Rahmen der vorliegenden Erfindung unter einer "flüssigen" Substanz oder Komponente eine solche zu verstehen, die bei der angegebenen Temperatur eine Viskosität von maximal 10 Pas aufweist. Ist keine Temperatur angegeben, bezieht sich die Angabe auf 20 °C. Die Messung erfolgt dabei nach ASTM D445-11. Vorzugsweise weisen die Urethangruppen enthaltenden Verbindungen mindestens zwei Urethangruppen auf. Dabei liegt das Molekulargewicht der Urethangruppen enthaltenden Verbindungen vorzugsweise im Bereich von 200 bis 15.000 g/mol, besonders bevorzugt 300 bis 10.000 g/mol und insbesondere 500 bis 1.300 g/mol. Urethangruppen enthaltende Verbindungen können beispielsweise erhalten werden durch Reaktion von oben genannten Isocyanaten (a1) als zweites Isocyanat mit Verbindungen, die mindestens ein gegenüber Isocyanaten reaktives Wasserstoffatom aufweisen, wie Alkohole, beispielsweise Monoalkohole, wie Methanol, Ethanol, Propanol, Butanol, Pentanol, Hexanol oder längerkettige propoxylierte oder ethoxylierte Monoole, wie Poly(ethyleneoxid)monomethylether, wie z.B. die monofunktionellen Pluriol® Typen der Fa. BASF, Dialkohole, wie Ethylenglycol, Diethylenglycol, Triethylenglycol, Propylenglycol, Dipropylenglycol, Butandiol, Hexandiol, und/oder Reaktionsprodukte genannter Isocyanate mit den unten beschriebenen Polyole (d) und/oder Kettenverlängerer (e) - einzeln oder in Mischungen. Dabei können zur Herstellung der Urethangruppen haltigen Verbindung sowohl Isocyanate als auch Polyole im stoichiometrischen Überschuss eingesetzt werden. Werden Monoaklohole eingesetzt können Isocyanatgruppen und OH-Gruppen auch im stöchiometrischen Verhältnis eingesetzt werden. Weist die urethangruppenhaltige Verbindung zwei oder mehr Isocyanatgruppen pro Molekül auf, können diese die Polyisocyanate (a) ganz oder teilweise ersetzen. Die Umsetzung erfolgt üblicherweise bei Temperaturen zwischen 20 und 120 °C, beispielsweise bei 80 °C. Das zur Herstellung der Urethangruppen enthaltenden Verbindung eingesetzte zweiten Isocyanat ist vorzugsweise ein Isomeres oder Homologes von Diphenylmethandiisocyanat. Besonders bevorzugt ist das zweite Isocyanat monomeres Diphenylmethandiisocyanat, beispielsweise 2,2'- Diphenylmethandiisocyanat, 2,4'- Diphenylmethandiisocyanat, 4,4'- Diphenylmethandiisocyanat oder eine Mischungen daraus. Dabei kann Diphenylmethandiisocyanat auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid, uretdion-, oder uretoniminmodifiziertes Diphenylmethandiisocyanat, insbesondere carbodiimid modifiziertes Diphenylmethandiisocyanat, enthalten. In einer besonders bevorzugten Ausführungsform sind das erste Isocyanat (a) und das zweite Isocyanat zur Herstellung der Urethangruppen haltigen Verbindung identisch.

Die Urethangruppen haltige Verbindung kann auch über alternative Reaktionswege erhalten werden, so zum Beispiel in dem ein Carbonat mit einem Monoamin zur Reaktion gebracht wird und eine Urethangruppe entsteht. Hierfür wird beispielsweise ein Propylencarbonat in leichtem Überschuß (1.1 eq.) mit einem Monoamin, z.B. einem Jeffamin M 600, bei 100 °C zur Reaktion gebracht. Das entstehende Urethan kann ebenfalls als Urethangruppe enthaltende Verbindung eingesetzt werden.

Die Mischungen enthaltend das Alkali- oder Erdalkalimetallsalze und eine Urethangruppen enthaltende Verbindung können beispielsweise durch Mischen des Alkali- oder Erdalkalimetallsalz in die Urethangruppen enthaltende Verbindung, beispielsweise bei Raumtemperatur oder bei erhöhter Temperatur, erhalten werden. Dazu kann jeder Mischer, beispielsweise ein einfacher Rührer, eingesetzt werden. Das Alkali- oder Erdalkalimetallsalz kann in diesem Fall als Reinsubstanz oder in Form einer Lösung, beispielsweise in ein- oder mehrfunktionellen Alkoholen, wie Methanol, Ethanol oder Kettenverlängerer (e), oder Wasser, eingesetzt werden. In einer besonders bevorzugten Ausführungsform wird dabei kommerziell erhältliches Praepolymerbasiertes Isocyanat direkt mit dem gelösten Salz versetzt. Hierfür geeignet sind z.B. Isocyanatprepolymere mit einem NCO-Gehalt von 15 bis 30 %, insbesondere auf Basis von Diphenylmethandiisocyanat und einem Polyetherpolyol. Solche Isocyanate sind beispielsweise kommerziell erhältlich von der BASF unter dem Handelsnamen Lupranat® MP 102.

In einer besonders bevorzugten Ausführungsform der vorliegenden Erfindung wird das Alkali- oder Erdalkalimetallsalz in einer Verbindung mit gegenüber Isocyanat reaktiven Wasserstoffatomen gelöst und anschließend, gegebenenfalls bei erhöhter Temperatur, mit dem Isocyanat vermischt.

Besonders bevorzugt wird zur Herstellung der Urethangruppenhaltigen Verbindung ein Monool mit einem Molekulargewicht von 30 bis 15 000 g/mol, bevorzugt 100 bis 900 g/mol und in einer besonders bevorzugten Ausführung von 400 bis 600 g/mol eingesetzt

Der Gehalt an Alkali- oder Erdalkalimetallionen pro Urethangruppe in der Verbindung (b) beträgt dabei 0,0001 bis 3,5, bevorzugt 0,01 bis 1,0, besonders bevorzugt 0,05 bis 0,9 und insbesondere 0,1 bis 0,8, jeweils bezogen auf die Anzahl der Alkali- oder Erdalkalimetallionen und Urethangruppen (pro Äquivalent Urethangruppen).

Der Gehalt an Alkali- oder Erdalkalimetallionen pro Isocyanatgruppe im ersten Polyisocyanat (a) sowie, falls vorhanden in der Komplexverbindung (b) beträgt vorzugsweise 0,0001 bis 0,3 besonders bevorzugt 0,0005 bis 0,02 und insbesondere 0,001 bis 0,01 Äquivalente, jeweils bezogen auf die Anzahl der Alkali- oder Erdalkalimetallionen und Urethangruppen.

Dabei besteht zwischen dem Alkali- oder Erdalkalimetallsalz in der Mischung (b) vorzugsweise bei 25 °C eine thermisch reversible Interaktion mit den urethangruppenhalteigen Verbindungen als Komponente (b), während bei Temperaturen größer 50 °C, vorzugsweise von 60 bis 200 °C und insbesondere von 80 bis 200 °C die katalytisch aktive Verbindung frei vorliegt. Im Sinn der Erfindung wird dabei von einer thermisch reversiblen Interaktion ausgegangen, wenn die offene Zeit der Reaktionsmischung bei 25 °C mindestens um den Faktor 5, besonders bevorzugt mindestens um den Faktor 10 und insbesondere mindestens um den Faktor 20 länger ist als bei 80 °C. Dabei wird die Offene Zeit bestimmt als die Zeit, in der die Viskosität der Reaktionsmischung bei konstanter Temperatur sich soweit erhöht, dass die erforderliche Rührkraft die gegebene Rührkraft des Shyodu Gel Timers, Typ 100, Version 2012 übersteigt. Hierzu wurden jeweils 200 g Reaktionsmischung angesetzt, in einem Speedmixer bei 1950 rpm 1 min vermischt und 130 g der Mischung bei Raumtemperatur oder erhöhter Reaktionstemperatur im Ofen in einem PP-Kunststoffbecher mit Durchmesser 7 cm mittels einem Shyodu Gel-Timer, Typ 100, Version 2012 und einem dazugehörigen Drahtrührer bei 20 rpm gerührt, bis die Viskosität und damit die erforderliche Rührkraft für die reaktive Mischung die Rührkraft des Gel-Timers überstieg.

Als eine oder mehrere Epoxidgruppen enthaltende Verbindung (c) können alle Epoxydhaltigen Verbindungen eingesetzt werden, die üblicherweise zur Herstellung von Epoxidharzen eingesetzt werden. Vorzugsweise sind die Epoxidgruppen enthaltende Verbindung (c) bei 25 °C flüssig. Dabei können auch Mischungen solcher Verbindungen eingesetzt werden, diese sind vorzugsweise ebenfalls bei 25 °C flüssig.

Beispiele für solche Epoxidgruppen haltigen Verbindungen, die im Rahmen der Erfindung eingesetzt werden können sind
I) Polyglycidyl and Poly([beta]-methylglycidyl) ester, erhältlich durch Reaktion einer Verbindung mit mindestens zwei Carboxylgruppen im Molekül und jeweils Epichlorohydrin und [Beta]-methylepichlorohydrin. Dabei wird die Reaktion vorteilhafterweise durch die Anwesenheit von Basen katalysiert.
   Aliphatische Polycarbonsäuren können beispielsweise als Verbindung mit mindestens zwei Carboxylgruppen eingesetzt werden. Beispiele für solche aliphatischen Polycarbonsäuren sind Oxalsäure, Bernsteinsäure, Glutarsäure, Adipinsäure, Pimelinsäure, Korksäure, Azelainsäure und dimerisierte oder trimerisierte Linolsäure. Weiter könne auch cyclische, aliphatische Säuren, wie Tetrahydrophthalsäure, 4-Methyltetrahydrophthalsäure, Hexahydrophthalsäure oder 4-Methylhexa hydrophthalsäure eingesetzt werden. Auch aromatische Carbonsäuren, wie Phthalsäure, Isophthalsäure oder Terephthalsäure sowie beliebige Mischungen dieser Carbonsäuren können eingesetzt werden.
II) Polyglycidyl oder Poly([beta]-methylglycidyl) ether, erhältlich durch Reaktion einer Verbindung mit mindestens zwei Alkohol-Hydroxylgruppen und/oder phenolischen Hydroxylgruppen mit Epichlorohydrin oder [Beta]-methylepichlorohydrin unter alkalischen Bedingungen oder in Gegenwart eines sauren Katalysators und anschließender Behandlung mit einer Base.
   Die Glycidylether diesen Typs sind beispielsweise abgeleitet von linearen Alkoholen, wie Ethylenglycol, Diethylenglycol oder hoheren Poly(oxyethylen)glycolen, Propan-1,2-diol oder Poly(oxypropylen)glycolen, Propan-1,3-diol, Butan-1,4-diol, Poly(oxytetramethylen)glycol, Pentan-1,5-diol, Hexan-1,6-diol, Hexan-2,4,6-triol, Glycerin, 1,1,1-Trimethylolpropan, Pentaerythritol oder Sorbitol, und von Polyepichlorohydrinen.
   Weitere Glycidylether diesen Typs sind erhältlich von cycloaliphatischen Alkoholen, wie 1,4-Cyclohexanedimethanol, Bis(4-hydroxycyclohexyl)methan oder 2,2-Bis(4-hydroxycyclohexyl)propan, oder von Alkoholen, die aromatische Gruppen und/oder weitere funktionale Gruppen tragen, wie N,N-Bis(2-hydroxyethyl)anilin oder p,p'-Bis(2- hydroxyethylamino)-diphenylmethan.
   Die Glycidylether können auch auf einkernigen Phenolen basiert sein, wie p-Tert-butylphenol, Resorcinol oder Hydrochinon, oder auf mehrkernigen Phenolen, wie Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan oder 2,2-Bis(3,5-dibromo-4-hydroxyphenyl)propan.
   Weitere Hydroxygruppenhaltige Verbindungen, die zur Herstellung der Glycidylether geeignet sind sind Novolacke, erhältlich durch Kondensation von Aldehyden, wie Formaldehyd, Acetaldehyd, Chloral- oder Furfuraldehyd, mit Phenolen oder Bisphenolen, die unsubstituiert oder substituiert sein können, beispielsweise mit Chloratomen oder C1 bis C9-Alkylgruppen, wie, Phenol, 4-Chlorophenol, 2- Methylphenol oder 4-Tert-butylphenol.
III) Poly(N-glycidyl)-Verbindungen, erhältlich durch Dehydrochlorierung von Reaktionsprodukten aus Epichlorohydrin mit Aminen, die zumindest zwei amingebundene Wasserstoffatome enthalten. Solche Amine sind beispielsweise Anilin, n-Butylamin, Bis(4-aminophenyl)methan, m-Xylylendiamin oder Bis(4-methylaminophenyl)methan. Die Poly(N-glycidyl)-Verbindungenschließen auch Triglycidylisocyanurate, N,N'-Diglycidylderivate von Cycloalkylenharnstoffen, wie Ethylenharnstoff oder 1,3-Propylenharnstoff, und Diglycidylderivate von Hydantoine, wie 5,5-Dimethylhydantoin.
IV) Poly(S-glycidyl)-Verbindungen, wie Di-S-glycidyl derivate, die erhältlich sind vonDithiolen, beispielsweise Ethan- 1,2-dithiol oder Bis(4-mercaptomethylphenyl)ether.
V) Cycloaliphatische Epoxyharze, wie Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexanecarboxylat.
VI) Monofunktionelle Epoxydharze, wie (2-Ethylhexyl)-glycidether, Isopropylglycidether, Butylglycidether oder Kresylglycidylether.

Es ist im Rahmen der Erfindung ebenfalls möglich Epoxyharze einzusetzen, bei denen die 1,2-Epoxygruppe an unterschiedliche Heteroatome oder funktionelle Gruppen gebunden ist. Diese Verbindungen schließen N,N,O-Triglycidyl-Derivate von 4-Aminophenol, die Glycidyletherglycidylester von Salicylsäure, N-Glycidyl-N'-(2-glycidyloxypropyl)-5,5-dimethylhydantoin und 2-Glycidyloxy-1,3-bis(5,5-dimethyl-1-glycidylhydantoin-3-yl)propan ein.

Besonders bevorzugt als Komponente (c) sind die Verbindungen der Klassen (I) und (II), insbesondere die der Klasse (II).

Vorzugsweise wird die eine oder mehrere Epoxidgruppen enthaltende Verbindung (c) in einer Menge von 0,3 bis 15 Gew.-%, vorzugsweise 0,5 bis 10 Gew.-% und insbesondere 0,8 bis 5 Gew.-%, bezogen auf das Gesamtgewicht der Komponenten (c) und (d), eingesetzt.

Der Gehalt an Alkali- oder Erdalkalimetallionen pro Epoxygruppe ist vorzugsweise größer als 0,00001 und beträgt besonders bevorzugt 0,00005 bis 0,3, jeweils bezogen auf die Anzahl der Alkali- oder Erdalkalimetallionen und Epoxygruppen.

Als Polyetherol mit einer mittleren Funktionalität von 1,8 bis 5,0, vorzugsweise 1,9 bis 4,8 und besonders bevorzugt 1,95 bis 4,4 und einer Hydroxylzahl von 200 bis 700, vorzugsweise 300 bis 650 und insbesondere 320 bis 450 mg KOH/g können übliche Polyetherole mit diesen Parametern eingesetzt werden. Als gegenüber Isocyanat reaktive Gruppen können Gruppen, wie OH-, SH- und NH- Gruppen enthalten sein. Vorzugsweise weisen die Polyole im Wesentlichen OH-Gruppen, besonders bevorzugt ausschließlich OH-Gruppen als gegenüber Isocyanat reaktive Gruppen auf. In einer bevorzugten Ausführungsform weisen die Polyole mindestens 40 % bevorzugt mindestens 60 %, besonders bevorzugt mindestens 80 % und insbesondere mindestens 95 % sekundäre OH-Gruppen, bezogen auf die Anzahl an gegenüber Isocyanaten reaktiven Gruppen, auf. In einer weiteren bevorzugten Ausführungsform weisen die Polyole mindestens 60 %, besonders bevorzugt mindestens 80 % und insbesondere mindestens 95 % primäre OH-Gruppen, bezogen auf die Anzahl an gegenüber Isocyanaten reaktiven Gruppen, auf. Dabei erfolgt die Berechnung der mittleren OH-Zahl sowie der mittleren Funktionalität auf Basis aller eingesetzten Polyetherole.

Die Polyetherole werden nach bekannten Verfahren, beispielsweise durch anionische Polymerisation von Alkylenoxiden unter Zusatz mindestens eines Startermoleküls, das 2 bis 4, vorzugsweise 2 bis 3 und besonders bevorzugt 2 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden. Für Polyetherole mit Hydroxyzahlen > 200 mg KOH/g kann als Katalysator auch ein tertiäres Amin, wie zum Beispiel Imidazol, eingesetzt werden. Solche Polyole werde beispielsweise in WO 2011/107367 beschrieben.

Vorzugsweise werden als Alkylenoxide eine oder mehrere Verbindungen mit 2 bis 4 Kohlenstoffatomen im Alkylenrest, wie Tetrahydrofuran, 1,2-Propylenoxid, oder 1,2- bzw. 2,3-Butylenoxid, jeweils alleine oder in Form von Mischungen, und vorzugsweise 1,2-Propylenoxid, 1,2 Butylenoxid und/oder 2,3-Butylenoxid, insbesondere 1,2-Propylenoxid eingesetzt.

Als Startermoleküle kommen beispielsweise Ethylenglycol, Diethylenglycol, Glycerin, Trimethylolpropan, Pentaerythrit, Saccharose, Methylamin, Ethylamin, Isopropylamin, Butylamin, Benzylamin, Anilin, Toluidin, Toluoldiamin, Naphtylamin, Ethylendiamin, Diethanolamin, Triethanolamin sowie andere, insbesondere zweiwertige Alkohole in Betracht.

Zur Modifizierung der mechanischen Eigenschaften, z.B. der Härte, kann sich der Zusatz von Kettenverlängerungsmitteln, Vernetzungsmitteln oder gegebenenfalls auch Gemischen davon als vorteilhaft erweisen. Bei der Herstellung eines erfindungsgemäßen Verbundstoffs kann ein Kettenverlängerungsmittel (e) eingesetzt werden. Dabei kann auch jedoch auf das Kettenverlängerungsmittel (e) verzichtet werden.

Werden niedermolekulare Kettenverlängerungsmittel (e) eingesetzt, können bei der Herstellung von Polyurethanen bekannten Kettenverlängerer eingesetzt werden. Dies sind vorzugsweise aliphatische, cycloaliphatische und/oder araliphatische oder aromatische Diole und gegebenenfalls Triole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan.

Dabei werden vorzugsweise neben dem Polyetherol (d) und den Kettenverlängerern (e) weniger als 50 Gew.-%, besonders bevorzugt weniger als 30 Gew.-% mehr bevorzugt weniger als 10 Gew.-% und insbesondere keine weiteren Verbindungen mit gegenüber Isocyanat reaktiven Wasserstoffatomen, wie Polyester oder Polycarbonatdiole, bezogen auf das Gesamtgewicht von Polyether (d), Kettenverlängerer (e) und den weiteren Verbindungen mit gegenüber Isocyanat reaktiven Wasserstoffatomen eingesetzt.

Im Rahmen der Erfindung werden als faserförmige Verstärkungsmittel (f) Fasern, wie Glasfasern, Aramidfasern, Kohlefasern oder Fasern aus Kunststoff eingesetzt. Solche Verstärkungsmittel sind bekannt und werden üblicherweise bei der Herstellung von faserverstärkten Kunststoffen eingesetzt. Vorzugsweise werden die faserförmigen Verstärkungsmittel lagenweise eingesetzt. Solche Faserlagen werden beispielsweise durch Verknüpfung einzelner Fasern erhalten. In einer bevorzugten Ausführungsform bestehen die faserförmigen Verstärkungsmittel aus Gelegen, Geweben oder Gewirken auf Basis von Glasfasern, Aramidfasern, Kohlefasern oder Fasern aus Kunststoff. Solche Verstärkungsmittellagen sind bekannt und kommerziell erhältlich. Insbesondere werden Glasfasermatten eingesetzt.

Weiter können Additive zur Wasseradsorption eingesetzt werden. Als Additive zur Wasseradsorption werden vorzugsweise Aluminosilikate, ausgewählt aus der Gruppe der Natriumaluminasilikate, Kaliumaluminasilikate Calciumaluminasilikate Cäsiumaluminasilikate, Bariumaluminasilikate, Magnesiumaluminasilikate Strontiumaluminasilikate Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Vorzugsweise hat das Additivs zur Wasserabsorption eine mittlere Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ängstroem. Neben den anorganischen Additiven zur Wasseradsorption können auch bekannte organische Additive zur Wasseradsorption, wie Orthoformiate, beispielsweise Triisopropylorthoformiat, eingesetzt werden.

Wenn ein Additiv zur Wasserabsorption zugegeben wird, geschieht dies vorzugsweise in Mengen größer einem Gewichtsteil, besonders bevorzugt im Bereich von 1,2 bis 2 Gewichtsteilen, bezogen auf das Gesamtgewicht des Polyisocyanuratsystems.

Sollen Polyurethanschaumstoffe hergestellt werden, können anstelle von Wasserfängern auch in der Polyurethanchemie übliche chemische und/oder physikalische Treibmittel eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. Vorzugsweise wird kein Treibmittel zugegeben.

Als Flammschutzmittel können im Allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 60 Gew.-%, besonders bevorzugt von 5 bis 50 Gew.-%, insbesondere von 5 bis 40 Gew.-%, bezogen auf das Gesamtgewicht der Komponenten (b) bis (e) verwendet.

Als interne Trennmittel können alle bei der Herstellung von Polyurethanen üblichen Trennmittel verwendet werden, beispielsweise in Diamin gelöste Metallsalze, wie Zinkstearat, und Derivate von Polyisobutylenbersteinsäure. Auch können weitere, in der Polyurethanchemie übliche Additive, wie Stabilisatoren, UV-Absorber oder Antioxidationsmittel, verwendet werden.

Ein erfindungsgemäßes Polyuretansystem weist vorzugsweise weniger als 0,5 Gew.-%, bevorzugt weniger als 0,3 Gew.-% Wasser, bezogen auf das Gesamtgewicht der Komponenten (b) bis (e), auf.

Die Herstellung der erfindungsgemäßen Polyurethane erfolgt durch Vermischen der Komponenten (a) bis (d) und gegebenenfalls (e) und (f) zu einer Reaktionsmischung, Auftragen der Reaktionsmischung auf das faserförmige Verstärkungsmittel und Ausreagieren lassen Polyurethan-Polyisocyanurat-Faserverbundteil. Dabei wird im Rahmen der Erfindung die Mischung der Komponenten (a) bis (f) bei Reaktionsumsätzen kleiner 90 %, bezogen auf die Isocyanatgruppen, als Reaktionsmischung bezeichnet. Einzelne Komponenten können dabei bereits vorgemischt sein. So können beispielsweise Polyisocyanate (a) und die Mischung, erhältlich durch Einbringen eines Alkali- oder Erdalkalimetallsalzes in eine Urethangruppen enthaltende Verbindung (b) vorgemischt werden sofern die Komponente (b) keine gegenüber Isocyanaten reaktive Gruppen aufweist. Ebenfalls können die Komponenten (c), (d), (e) und (f) vorgemischt werden. Sollte die Komponente (b) keine Isocyanatgruppen enthalten, kann auch die Komponente (b) zu dieser Mischung zugegeben werden.

Erfindungsgemäße Reaktionsmischungen weisen eine lange offene Zeit bei 25 °C auf, beispielsweise von mehr als 60 Minuten, bevorzugt von mehr als 90 Minuten und besonders bevorzugt von mehr als 120 Minuten. Die Offene Zeit wird dabei wie oben beschrieben über den Viskositätsanstieg ermittelt. Bei Temperaturerhöhung auf Temperaturen größer 60 °C, bevorzugt 70 bis 120 °C, besonders bevorzugt auf 70 bis 100 °C und insbesondere 75 bis 95 °C härtet die erfindungsgemäße Reaktionsmischung schnell aus, beispielsweise in weniger als 50 Minuten, vorzugsweise in weniger als 30 Minuten, besonders bevorzugt in weniger als 20 Minuten und insbesondere in weniger als 10 Minuten. Dabei wird im Rahmen der Erfindung unter Aushärtung einer erfindungsgemäßen Reaktionsmischung die Erhöhung der Anfangsviskosität auf das 10-fache der Anfangsviskosität verstanden. Dabei ist die Differenz zwischen der Offenen Zeit bei 25 °C und der Offenen Zeit bei 80 °C vorzugsweise mindestens 40 Minuten, bevorzugt mindestens eine Stunde und besonders bevorzugt mindestens 2 Stunden.

Der Isocyanatindex für ein erfindungsgemäßes Verfahren liegt im Bereich von 200 bis 450, vorzugsweise bei 250 bis 450 und insbesondere bei 280 bis 450. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel und Verbindungen mit Epoxid-gruppen, verstanden, nicht aber die Isocyanatgruppe selbst.

Vorzugsweise wird mit dem erfindungsgemäßen Verfahren ein kompaktes Material erhalten, das heißt, es wird kein Treibmittel zugegeben. Geringe Treibmittelmengen, beispielsweise geringe Wassermengen, die über Luftfeuchtigkeit beim Verarbeiten in die Reaktionsmischung oder die Ausgangskomponenten Einkondensieren sind dabei nicht umfasst. Als kompaktes Polyurethan-Polyisocyanurat-Faserverbundteil wird ein Polyurethan-Polyisocyanurat-Faserverbundteil bezeichnet, das im Wesentlichen frei von Gaseinschlüssen ist. Vorzugsweise ist die Dichte eines kompakten Polyurethan-Polyisocyanurat-Faserverbundteils ohne Berücksichtigung des Faseranteils größer 0,8 g/cm³, besonders bevorzugt größer 0,9 g/cm³ und insbesondere größer 1,0 g/cm³.

Vorzugsweise werden bis auf das in Komponente (b) eingesetzte Alkali- oder Erdalkalimetallsalz im erfindungsgemäßen Verfahren keine Verbindungen zur Beschleunigung der Isocyanat-Polyol-Reaktion und insbesondere keine der üblichen Polyurethankatalysatoren auf Basis von Verbindungen mit tertiären Amingruppen, eingesetzt. Die erfindungsgemäßen Polyurethan-Polyisocyanurat-Faserverbundteile zeichnen sich durch hervorragende mechanische Eigenschaften aus, die innerhalb von weiten Grenzen variiert werden können.

Das erfindungsgemäße Verfahren ermöglicht eine hervorragende Benetzung ohne Fehlstellen und eine schnelle Aushärtung bei 70 bis 150 °C, vorzugsweise 70 bis 100 °C und insbesondere 75 bis 95 °C. Die erhaltenen Polyurethan-Polyisocyanurat-Faserverbundformteile besitzen hervorragende mechanische Eigenschaften und eine sehr gute Oberfläche.

Gegenstand der vorliegenden Erfindung ist weiter das Polyurethan-Polyisocyanurat-Faserverbundteil, erhältlich nach einem erfindungsgemäßen Verfahren und die Verwendung eines erfindungsgemäßen Polyurethan-Polyisocyanurat-Faserverbundteils zur Herstellung einer Vielzahl von Kompositmaterialien, beispielsweise in Resin Transfer Moulding (RTM), Resin Injection Moulding (RIM) oder Structural Reaction Injection Molding (SRIM), um beispielsweise Karosseriebauteile für Fahrzeuge, Tür oder Fensterrahmen oder wabenverstärkte Bauteile herzustellen oder in Vakuum assistierter Harzinfusion um beispielsweise strukturelle- oder semistrukturelle-Bauteile für Fahrzeuge oder Windkraftanlagen herzustellen. Dabei kann die Vakuum assistierte Harzinfusion die Infusion von faserförmigen Verstärkungsmitteln in einer geschlossenen Form, dem sogenannten RTM-Verfahren und vorzugsweise in einer offenen Form, der sogenannten Vakuuminfusion, erfolgen.

Die Verbundstoffe mit dem erfindungsgemäß hergestellten Polyurethan-Polyisocyanurat-Faserverbundteil können des Weiteren für beispielsweise großstückzahlige Produktion von Teilen für Fahrzeuge, Bauteile für Züge, Luft- und Raumfahrt, marine Anwendungen, Windkraftanlagen, Strukturbauteile, Klebstoffe, Packaging, Verkapselungsstoffe und Isolatoren verwendet werden. Vorzugsweise wird das nach einem erfindungsgemäßen Verfahren hergestellte Polyurethan-Polyisocyanurat-Faserverbundteil zur Herstellung von strukturellen- oder semistrukturellen Bauteile für Windkraftanlagen, Fahrzeuge, wie Stoßstangen, Kotflügel oder Dachteile, und Marineanwendungen, wie Rotorblätter, Spiralfedern oder Schiffkörper, eingesetzt. Dabei werden unter struktuerellen Bauteilen solche verstanden, die unter Einsatz von Langfasern mit einer mittleren Faserlänge von mehr als 10 cm, vorzugsweise mehr als 50 cm, und unter semistrukturellen Bauteilen solche verstanden, die unter Einsatz von Kurzfasern mit einer mittleren Faserlänge von weniger als 10 cm, vorzugsweise weniger als 5 cm, erhalten werden.

Im Folgenden soll die gegenwärtige Erfindung anhand von Beispielen verdeutlicht werden:

### Ausgangsmaterialien:

- Polyol 1: Saccharose/Glycerin gestartetes Polyetherpolyol mit Propylenglycol, einer Funktionalität von 4,3, und einer OH-Zahl von 490 mg KOH/g.
- Polyol 2: Polypropylenoxid, Funktionalität =2, OHZ = 250 mg KOH/g
- GDE 1: Bisphenol A basierter Diglycidylether, z.B. Araldite GY 250 der Fa. Huntsman
- ZM1: Wasserfänger auf Zeolithbasis
- ZM 2: Entschäumer
- ZM3: Reaktionsprodukt bestehend aus Iso 3 mit einem monofunktionalen Polyethylenoxid mit einem zahlenmittleren Molekulargewicht von 500 g/mol, erhältlich unter dem Handelsnamen "Pluriol® A 500 E" der Fa. BASF
- Kat 1: Mischung aus LiCI und ZM3, 0,50 eq. LiCI bezogen auf Anzahl Urethanbindungen in ZM 3
- Kat 2: nicht erfindungsgemäße Mischung aus LiCI und Harnstoff-Prepolymer, erhältlich durch Reaktion von Jeffamin M600 und Iso 3 sowie 0,70 eq. LiCI, bezogen auf Anzahl Harnstoffbindungen des Praepolymers wie entsprechend in WO10121898 beschrieben.
- Kat 3: Kaliumacetat
- Kat 4: N,N',N'-tris-Dimethylaminopropylhexahydrotrianzin
- Kat 5: 1,8-Diazabicyclo[5.4.0]undec-7-en (DBU)
- Kat 6: Phenolisch blockiertes geblocktes 1,8-Diazabicyclo[5.4.0]undec-7-en
- Iso 1: Diphenylmethandiisocyanat (MDI) mit höherkernigen Homologen, NCO-Gehalt 31,5 %
- Iso 2: Mischung aus 2,4'-MDI und 4,4'-MDI
- Iso 3: Carbodiimidmodifiziertes 4,4'-Diphenylmethandiisocyanat (MDI), NCO-Gehalt 29,5 %

Herstellung ZM 3: Das Monool wurde in einem Glaskolben vorgelegt und unter kräftigem Rühren mittels eines Magnetrührers das Isocyanat zugegeben. Während der gesamten Synthese wurde die Temperatur mittels Temperaturfühler überwacht. Dann wurde auf 70 °C erhitzt bis die Reaktion startete. Erhitzte sich die Reaktion von selbst, wurde mit Eisbad gekühlt, verhielt sich die Reaktion eher träge wurde die Temperatur weiterhin auf 90 °C erhöht und weitere 30 min gerührt. Nach Ende der Reaktion wurde das Reaktionsgemisch auf Raumtemperatur abgekühlt. Je nach Molekulargewicht des eingesetzten Monools erhielt man einen Feststoff oder ein viskoses Öl.

Herstellung Kat 1: ZM 3 wurde mit der entsprechenden, in Ethanolgelösten Menge LiCI vermischt und auf 70 °C erhitzt und für 30 min bei dieser Temperatur gerührt. Anschließend wurde das Reaktionsgemisch abgekühlt und überschüssiges Ethanol im Rotationsverdampfer abgezogen.

Gemäß Tabelle 1 wurden die Polyole, Zusatzmittel 1 und 2 sowie, falls vorhanden GDE und Katalysator 2 bis 5 zu einer Polyolkomponente und Isocyanat 1 und 2 sowie Kat 1 zu einer Isocyanatkomponente vorgemischt. Polyol- und Isocyaantkomponente wurden dann bei einem Isocyanatindex von 300 bei Raumtemperatur in einem Speedmischer bei 800 rpm für 1 min vermischt. Anschließend wurde die Offene Zeit (OT) mithilfe des Shyodu Gel timers, Typ 100, Version 2012 bei 25 °C und bei 80 °C bestimmt.

**Tabelle 1**

| | R1 | E1 | E2 | V1 | V2 | V3 | V4 | V5 | V6 | V7 | V8 | V9 |
|---|---|---|---|---|---|---|---|---|---|---|---|---|
| Polyol 1 | 42 | 42 | 42 | 42 | 42 | 42 | 42 | 42 | 42 | 42 | 42 | 42 |
| Polyol 2 | 55 | 55 | 55 | 55 | 55 | 55 | 55 | 55 | 55 | 55 | 55 | 55 |
| ZM1 | 2.9 | 2.9 | 2.9 | 2.9 | 2.9 | 2.9 | 2.9 | 2.9 | 2.9 | 2.9 | 2.9 | 2.9 |
| ZM2 | 0.1 | 0.1 | 0.1 | 0.1 | 0.1 | 0.1 | 0.1 | 0.1 | 0.1 | 0.1 | 0.1 | 0.1 |
| GDE | | 1 | 3 | 1 | 3 | | | | | | | |
| Kat 3 | | | | | | 0.12 | 0.05 | | | | | |
| Kat 4 | | | | | | | | 0.05 | 0.1 | 0.2 | | |
| Kat 5 | | | | | | | | | | | 0.4 | |
| Kat 6 | | | | | | | | | | | | 0.8 |
| | | | | | | | | | | | | |
| Iso 1 | 40 | 40 | 40 | 40 | 40 | 40 | 40 | 40 | 40 | 40 | 40 | 40 |
| Iso 2 | 60 | 60 | 60 | 60 | 60 | 60 | 60 | 60 | 60 | 60 | 60 | 60 |
| Kat 1 | | 1.5 | 1.5 | | | | | | | | | |
| Kat 2 | | | | 1,5 | 1,5 | | | | | | | |
| | | | | | | | | | | | | |
| Index | 300 | 300 | 300 | 300 | 300 | 300 | 300 | 300 | 300 | 300 | 300 | 300 |
| MR | 240 | 240 | 240 | 240 | 240 | 240 | 240 | 240 | 240 | 240 | 240 | 240 |
| | | | | | | | | | | | | |
| OZ 25°C (min) | >360 | 360 | 291.5 | >360 | >360 | 11.5 | 37.2 | 83 | 36.9 | 13.6 | 99 | 65 |
| OZ 80°C (min) | >60 | 17 | 13.7 | 22 | 19 | 3.3 | 8.8 | 66.8 | 7.6 | 6.3 | 6.6 | 5.3 |

Die Tabelle zeigt, dass bereits geringe Mengen Diglycidylether und Katalysator 1 dazu führen, dass gegenüber dem Referenzbeispiel ohne Katalysator und ohne Diglycidylether die Aushärtung bei 80 °C deutlich beschleunigt wird, während die offene Zeit bei Raumtemperatur im Wesentlichen unverändert bleibt. Dies kann durch Einsatz üblicher Katalysatoren nicht erreicht werden. Wird Katalysator 2 eingesetzt ist die offene Zeit bei Raumtemperatur ebenfalls sehr lang, die offene Zeit bei 80 °C ist aber deutlich langsamer als für erfindungsgemäße Katalysatoren.

Gemäß der Zusammensetzung von E1 und E2 wurden Platten hergestellt und die Glastemperatur nach dem 2. Aufheizen bestimmt. Diese lag für E1 bei 81 °C und 192 °C, für C1 bei 86 und 206 °C

## Patentansprüche

1. Verfahren zur Herstellung von Polyurethan-Polyisocyanurat-Faserverbundteilen, bei dem man
a) Polyisocyanat,
b) eine Mischung erhältlich durch Einbringen eines Alkali- oder Erdalkalimetallsalzes in eine Urethangruppen enthaltende Verbindung R-NH-CO-R' enthalten, wobei R ungleich Wasserstoff bzw. ungleich COR" ist,
c) eine oder mehrere Epoxidgruppen enthaltende Verbindung und
d) Polyetherol mit einer mittleren Funktionalität von 1,8 bis 5,0 und einer Hydroxylzahl von 200 bis 500,
e) Kettenverlängerer und
f) faserförmige Verstärkungsmittel und gegebenenfalls weitere Additive
zu einer Reaktionsmischung vermischt, die Reaktionsmischung auf das faserförmige Verstärkungsmittel aufbringt und zum Polyurethan-Polyisocyanurat-Faserverbundteil ausreagieren lässt, wobei der Gehalt an Alkali- oder Erdalkalimetallionen pro Urethangruppe in der Verbindung (b) 0,0001 bis 3,5, bezogen auf die Anzahl der Alkali- oder Erdalkalimetallionen und Urethangruppen, beträgt, der Anteil an der eine oder mehrere Epoxidgruppen enthaltende Verbindung (c) von 0,3 bis 15 Gew.-%, bezogen auf das Gesamtgewicht der Komponenten (c) und (d), beträgt und der Isocyanatindex 200 bis 450 ist.

2. Verfahren nach Anspruch 1, **dadurch gekennzeichnet, dass** das Polyetherol (d) mindestens 40 %sekundäre OH-Gruppen aufweist.

3. Verfahren nach Anspruch 1 oder 2, **dadurch gekennzeichnet, dass** als Polyisocyanat (a) ein erstes Polyisocyanat eingesetzt wird und die Urethangruppen enthaltende Verbindung in Komponente (b) ein Umsetzungsprodukt aus einem zweiten Polyisocyanat und einer Verbindung mit einer OH-Gruppe ist.

4. Verfahren nach einem der Ansprüche 1 bis 3, **dadurch gekennzeichnet, dass** das Polyisocyanat (a) ein Polyisocyanatprepolymer mit einem NCO-Gehalt von 5 bis 33 Gew.-% ist.

5. Verfahren nach einem der Ansprüche 1 bis 4, **dadurch gekennzeichnet, dass** als Urethangruppen enthaltende Verbindung in Komponente (b) ein Umsetzungsprodukt aus einem zweiten Polyisocyanat und einer Verbindung mit mindestens zwei OH-Gruppen eingesetzt wird, wobei das zweite Isocyanat in einem stöchiometrischen Überschuss eingesetzt wird.

6. Verfahren nach einem der Ansprüche 1 bis 5, **dadurch gekennzeichnet, dass** das zweite Isocyanat eines oder mehrere Isomere oder Homologe des Diphenylmethans enthält.

7. Verfahren nach einem der Ansprüche 1 bis 6, **dadurch gekennzeichnet, dass** der Gehalt an Alkali- oder Erdalkalimetallionen pro Isocyanatgruppe im ersten Polyisocyanat (a) sowie in der Komplexverbindung (b), 0,0001 bis 0,3, bezogen auf die Anzahl der Alkali- oder Erdalkalimetallionen und Isocyanatgruppen beträgt.

8. Verfahren nach einem der Ansprüche 1 bis 7, **dadurch gekennzeichnet, dass** die Epoxidgruppen enthaltende Verbindung zwei, drei oder mehr Epoxidgruppen pro Molekül enthält.

9. Verfahren nach einem der Ansprüche 1 bis 8, **dadurch gekennzeichnet, dass** das Alkali- oder Erdalkalimetallsalz Lithiumchlorid ist.

10. Verfahren nach einem der Ansprüche 1 bis 9, **dadurch gekennzeichnet, dass** die Komplexverbindung (b) erhalten wird durch Mischen von Polyisocyanat, einer Verbindung mit einer gegenüber Isocyanat reaktiven Verbindung und dem Alkali- oder Erdalkalimetallsalz.

11. Verfahren nach einem der Ansprüche 1 bis 10, **dadurch gekennzeichnet, dass** die eine oder mehrere Epoxidgruppen enthaltende Verbindungen in einer Menge eingesetzt werden, dass das Equivalentverhältnis von Epoxidgruppe zu Isocyanatgruppe der Polyisocyanate (a) sowie gegebenenfalls in der Komplexverbindung (b) enthaltenen Isocyanatgruppen 0,1 bis 2,0 beträgt.

12. Polyurethan-Polyisocyanurat-Faserverbundteil, erhältlich nach einem Verfahren gemäß einem der Ansprüche 1 bis 11.

13. Verwendung eines Polyurethan-Polyisocyanurat-Faserverbundteils nach Anspruch 12 zur Herstellung von strukturellen- oder semistrukturellen Faserverbundwerkstoffen für Windkraftanlagen, Fahrzeuge und Marine Bauteile.

## Claims

1. A process for producing polyurethane-polyisocyanurate-fiber composite parts, wherein
a) polyisocyanate,
b) a mixture obtainable by introducing an alkali metal salt or alkaline earth metal salt into a compound R-NH-CO-R' containing urethane groups comprise, with R being not hydrogen and/or not COR",
c) compound containing one or more epoxide groups, and
d) polyetherol having an average functionality of 1.8 to 5.0 and a hydroxyl number of 200 to 500,
e) chain extender, and
f) fibrous reinforcing agents and optionally further additives
are mixed to form a reaction mixture, the reaction mixture is applied to the fibrous reinforcing agent and caused to react to form the polyurethane-polyisocyanurate-fiber composite part, the amount of alkali metal ions or alkaline earth metal ions per urethane group in the compound (b) being 0.0001 to 3.5, based on the number of alkali metal or alkaline earth metal ions and urethane groups, the fraction of the compound (c) containing one or more epoxide groups being from 0.3 to 15 wt%, based on the total weight of components (c) and (d), and the isocyanate index being 200 to 450.

2. The process according to claim 1, wherein the polyetherol (d) has at least 40% of secondary OH groups.

3. The process according to claim 1 or 2, wherein a first polyisocyanate is used as polyisocyanate (a), and the compound containing urethane groups in component (b) is a reaction product of a second polyisocyanate and a compound having an OH group.

4. The process according to any of claims 1 to 3, wherein the polyisocyanate (a) is a polyisocyanate prepolymer having an NCO content of 5 to 33 wt%.

5. The process according to any of claims 1 to 4, wherein said compound containing urethane groups used in component (b) is a reaction product of a second polyisocyanate and a compound having at least two OH groups, the second isocyanate being used in a stoichiometric excess.

6. The process according to any of claims 1 to 5, wherein the second isocyanate comprises one or more isomers or homologs of diphenylmethane.

7. The process according to any of claims 1 to 6, wherein the amount of alkali metal ions or alkaline earth metal ions per isocyanate group in the first polyisocyanate (a) and also in the complex compound (b) is 0.0001 to 0.3, based on the number of alkali metal or alkaline earth metal ions and isocyanate groups.

8. The process according to any of claims 1 to 7, wherein the compound containing epoxide groups comprises two, three or more epoxide groups per molecule.

9. The process according to any of claims 1 to 8, wherein the alkali metal salt or alkaline earth metal salt is lithium chloride.

10. The process according to any of claims 1 to 9, wherein the complex compound (b) is obtained by mixing polyisocyanate, a compound having a compound that is reactive toward isocyanate, and the alkali metal salt or alkaline earth metal salt.

11. The process according to any of claims 1 to 10, wherein the compounds containing one or more epoxide groups are used in an amount such that the equivalents ratio of epoxide group to isocyanate group in the polyisocyanates (a) and also, optionally, isocyanate groups present in the complex compound (b) is 0.1 to 2.0.

12. A polyurethane-polyisocyanurate-fiber composite part obtainable by a process according to any of claims 1 to 11.

13. The use of a polyurethane-polyisocyanurate-fiber composite part according to claim 12 for producing structural or semistructural fiber composite materials for wind turbines, vehicles, and marine components.

## Revendications

1. Procédé de fabrication de pièces composites fibreuses en polyuréthane-polyisocyanurate, selon lequel :
a) du polyisocyanate,
b) un mélange pouvant être obtenu par introduction d'un sel de métal alcalin ou alcalino-terreux dans un composé contenant des groupes uréthane R-NH-CO-R' contiennet, R étant différent de l'hydrogène et différent de COR",
c) un composé contenant un ou plusieurs groupes époxyde, et
d) un polyétherol ayant une fonctionnalité moyenne de 1,8 à 5,0 et un indice hydroxyle de 200 à 500,
e) des allongeurs de chaîne, et
f) des agents renforçants fibreux et éventuellement d'autres additifs,
sont mélangés pour former un mélange réactionnel, le mélange réactionnel est appliqué sur l'agent renforçant fibreux et laissé réagir pour former la pièce composite fibreuse en polyuréthane-polyisocyanurate, la teneur en ions de métaux alcalins ou alcalino-terreux par groupe uréthane dans le composé (b) étant de 0,0001 à 3,5, par rapport au nombre d'ions de métaux alcalins ou alcalino-terreux et de groupes uréthane, la proportion du composé contenant un ou plusieurs groupes époxyde (c) étant de 0,3 à 15 % en poids, par rapport au poids total des composants (c) et (d), et l'indice d'isocyanate étant de 200 à 450.

2. Procédé selon la revendication 1, **caractérisé en ce que** le polyétherol (d) comprend au moins 40 % de groupes OH secondaires.

3. Procédé selon la revendication 1 ou 2, **caractérisé en ce qu'**un premier polyisocyanate est utilisé en tant que polyisocyanate (a), et le composé contenant des groupes uréthane dans le composant (b) est un produit de réaction d'un deuxième polyisocyanate et d'un composé contenant un groupe OH.

4. Procédé selon l'une quelconque des revendications 1 à 3, **caractérisé en ce que** le polyisocyanate (a) est un prépolymère de polyisocyanate ayant une teneur en NCO de 5 à 33 % en poids.

5. Procédé selon l'une quelconque des revendications 1 à 4, **caractérisé en ce qu'**un produit de réaction d'un deuxième polyisocyanate et d'un composé contenant au moins deux groupes OH est utilisé en tant que composé contenant des groupes uréthane dans le composant (b), le deuxième isocyanate étant utilisé en un excès stœchiométrique.

6. Procédé selon l'une quelconque des revendications 1 à 5, **caractérisé en ce que** le deuxième isocyanate contient un ou plusieurs isomères ou homologues de diphénylméthane.

7. Procédé selon l'une quelconque des revendications 1 à 6, **caractérisé en ce que** la teneur en ions de métaux alcalins ou alcalino-terreux par groupe isocyanate dans le premier polyisocyanate (a), ainsi que dans le composé complexe (b), est de 0, 0001 à 0,3, par rapport au nombre d'ions de métaux alcalins ou alcalino-terreux et de groupes isocyanate.

8. Procédé selon l'une quelconque des revendications 1 à 7, **caractérisé en ce que** le composé contenant des groupes époxyde contient deux, trois ou davantage de groupes époxyde par molécule.

9. Procédé selon l'une quelconque des revendications 1 à 8, **caractérisé en ce que** le sel de métal alcalin ou alcalino-terreux est le chlorure de lithium.

10. Procédé selon l'une quelconque des revendications 1 à 9, **caractérisé en ce que** le composé complexe (b) est obtenu par mélange d'un polyisocyanate, d'un composé contenant un composé réactive avec les isocyanates et du sel de métal alcalin ou alcalino-terreux.

11. Procédé selon l'une quelconque des revendications 1 à 10, **caractérisé en ce que** les composés contenant un ou plusieurs groupes époxyde sont utilisés en une quantité telle que le rapport équivalent entre le groupe époxyde et le groupe isocyanate des polyisocyanates (a), ainsi qu'éventuellement les groupes isocyanate contenus dans le composé complexe (b), soit de 0,1 à 2,0.

12. Pièce composite fibreuse en polyuréthane-polyisocyanurate, pouvant être obtenue par un procédé selon l'une quelconque des revendications 1 à 11.

13. Utilisation d'une pièce composite fibreuse en polyuréthane-polyisocyanurate selon la revendication 12 pour la fabrication de matériaux composites fibreux structuraux ou semi-structuraux pour des installations éoliennes, des véhicules et des composants marins.
